# EUROPÄISCHE PATENTSCHRIFT

(11) **EP 1 481 721 B1**
(45) Veröffentlichungstag und Bekanntmachung des Hinweises auf die Patenterteilung: **21.05.2008**
(21) Anmeldenummer: 04006952.8
(22) Anmeldetag: 23.03.2004
(51) Int. Cl.: B01F 7/24

(54) **Mischer**
Mixer
Mélangeur

(30) Priorität: 28.05.2003 DE 20308404 U
(43) Veröffentlichungstag der Anmeldung: 01.12.2004
(73) Patentinhaber: Trioliet Mullos B.V., 7570 AC Oldenzaal (NL)
(72) Erfinder: Van der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- DE-U1- 29 911 066
- US-A- 5 647 665
- US-A- 5 803 375

## Beschreibung

Die Erfindung bezieht sich auf einen Mischer, insbesondere einen Futtermischer, der im Oberbegriff von Anspruch 1 erläuterten Art.

Ein derartiger Mischer ist aus der DE-U-299 11 066 bekannt. Der bekannte Mischer enthält eine Mischschnecke, die einen einzigen, sich schraubenförmig um eine Schneckenwelle herumwindenden Schneckengang aufweist. Der Schneckengang endet im unteren Bereich der Schneckenwelle mit einer Aufnahmekante. Die bekannte Mischschnecke ist weiterhin mit einem kurzen Zusatzflügel versehen, der ähnlich wie ein weiterer, jedoch kürzerer Schneckengang ausgebildet ist, der sich von minimal 20° bis maximal 360° um die Schneckenwelle herum erstreckt. Der Zusatzflügel ist mit einer Aufnahmekante versehen, die um 180° versetzt zur Aufnahmekante des eigentlichen Schneckengangs angeordnet ist. Die Breite des Zusatzflügels in Radialrichtung ist im Bereich der Aufnahmekante maximal und verringert sich kontinuierlich und ausgeprägt mit zunehmendem Abstand von der Aufnahmekante bis auf Null. Der Zweck dieses Zusatzflügels ist es, die bei Mischschnecken mit einem einzigen Schneckengang zu beobachtende diskontinuierliche Ausgabe des Mischgutes durch die Ausgabeöffnung zu vergleichmäßigen, wobei die Maximalmenge an Mischgut immer dann ausgegeben wird, wenn die Aufnahmekante des Schneckengangs die Ausgabeöffnung passiert, und wobei sich die Menge des ausgegebenen Mischgutes anschließend wieder stark verringert. Der Konstruktion der bekannten Mischschnecke liegt somit die Überlegung zugrunde, dass man mit der Anordnung einer zweiten Aufnahmekante zwei Maxima der Mischgutausgabe erreicht. Dieses Ergebnis ist jedoch nicht befriedigend.

Aus der US-A 5-803 375 ist ein Futtermischer bekannt, dessen Mischschnecke als Schneideinrichtung ausgebildet ist und der eine zweite Schneideinrichtung aufweist, die zwischen der Mischkammer und der Ausgabeöffnung vorgesehen ist. Die Mischschnecke weist einen einzigen Schneckengang auf, an dessen Umfang Messer vorstehen. Um Messer auch im unteren Bereich der Schnecke vorstehen zu lassen, ist hier der ansonsten spiralig auf die Drehachse zu verlaufende Außenkantenbereich des Schneckengangs durch einen abgeschnittenen, geraden Bereich unterbrochen.

Mischvorrichtungen mit Mischschnecken sind weiterhin mit den unterschiedlichsten Zusatzeinrichtungen versehen. So zeigt die US-A-5 456 416 einen Mischer, bei dem der untere Bereich der Mischschnecke radial nach außen, flügelartig verlängert ist, wobei die vorlaufende Aufnahmekante genau auf der radialen Linie zur Drehachse liegt. Auf der Oberseite dieses Verlängerungsteils ist eine Abstoßplatte montiert, die das Mischgut in Richtung zur Drehachse leitet.

Die US-A-5 590 963 zeigt einen Futtermischer, der im unteren Bereich der Mischschnecke mit drei gleichmäßig verteilten Schieber- oder Glättklingen versehen ist. Die Klingen sind mit den äußeren Bereichen ihrer Aufnahmekanten nachlaufend angeordnet und weisen eine schmale, streifenartige Gestalt auf, so dass sich auch hier nichts ablagem kann.

Eine ähnliche Konstruktion zeigt die US-A-5 647 665.

Die US-A-3 997 146 zeigt einen Futtermischer, dessen Mischschnecke in ihrem unteren Bereich wiederum mit zwei streifenförmig sich nach außen erstreckenden Abstreifelementen versehen ist, deren vorlaufende Kanten radial zur Drehachse verlaufen.

Die GB-A-2 310 793 beschreibt einen Futtermischer, der eine Vielzahl von verschiedenen Elementen am unteren Bereich der Mischschnecke aufweist. So enthält die Mischschnecke einen streifenförmigen Träger, dessen Vorlaufkante radial verläuft, und dessen Oberseite mit Messern versehen ist. Weiterhin ist ein Paddel vorgesehen, das an einem in Umfangsrichtung schmalen Arm mit der Drehachse verbunden ist. Das Paddel ist konstruktiv so ausgebildet, dass es das in der Nähe der Begrenzungswand der Mischkammer herabfallende Mischgut nach oben drückt, wodurch die Dichte des Materials in diesem Bereich erhöht wird.

Der Erfindung liegt die Aufgabe zugrunde, einen Mischer auf konstruktiv einfache Weise so auszugestalten, dass sein Ausgabeverhalten für das Mischgut verbessert bzw. vergleichmäßigt wird.

Die Aufgabe wird durch die im Anspruch 1 angegebenen Merkmale gelöst.

Die vorliegende Erfindung basiert auf der Erkenntnis, dass es mit der Erhöhung der Anzahl der Rührwerkzeuge bzw. der Aufnahmekanten zum Wegschieben des Mischgutes nur unvollständig möglich ist, die Ausgabe des Mischgutes zu vergleichmäßigen. Demgegenüber wurde erfindungsgemäß festgestellt, dass ein wesentlich besseres Ergebnis dadurch erzielt wird, wenn man zu diesem Zweck die Einwirkung der Zentrifugalkraft auf das Mischgut erhöht bzw. verlängert, in dem man eine Führungsplatte vorsieht, die mit einer Auflagefläche für das Mischgut versehen ist, auf dem das Mischgut ruht und von dem das Mischgut durch die Drehung der Führungsplatte nach und nach abgeschleudert wird. Auf diese Weise wird auf konstruktiv einfache Weise eine wesentlich bessere und gleichmäßigere Abgabe des Mischgutes aus der Ausgabeöffnung erreicht, als dies allein durch die zusätzliche Rührwirkung der vorlaufenden Kante der Führungsplatte zu erreichen wäre.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: einen Schnitt durch einen erfindungsgemäß ausgerüsteten Mischer in stark schematisierter Darstellung,
- Fig. 2: eine vergrößerte Draufsicht auf die Mischschnecke nach Fig. 1,
- Fig. 3: eine vergrößerte Seitenansicht der Mischschnecke nach Fig. 1,
- Fig. 4: eine Draufsicht auf ein weiteres Ausführungsbeispiel einer erfindungsgemäß ausgebildeten Mischschnecke,
- Fig. 5: die Seitenansicht der Mischschnecke der Fig. 4,
- Fig. 6: eine Draufsicht auf ein weiteres Ausführungsbeispiel einer erfindungsgemäß ausgebildeten Mischschnecke, und
- Fig. 7: die Seitenansicht der Fig. 6.

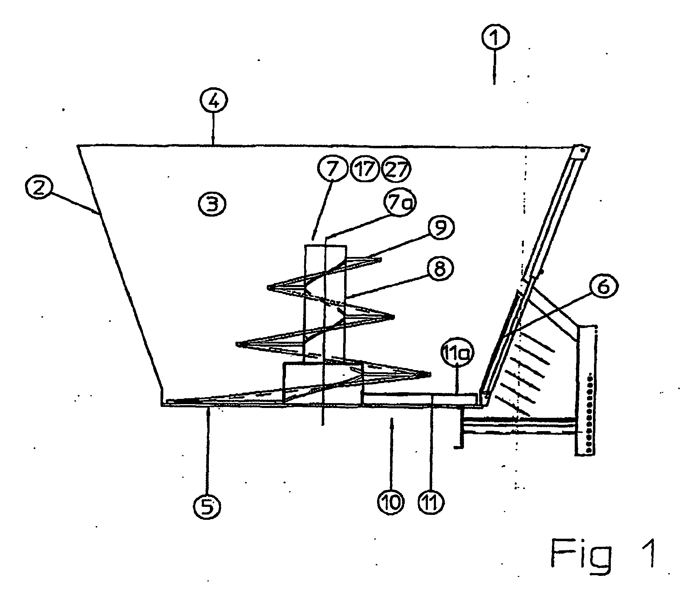

In Fig. 1 ist in stark schematisierter Darstellung ein Mischer 1 gezeigt, der als Futtermischer, beispielsweise als Futtermischwagen Verwendung finden kann. Der Mischer 1 enthält einen Behälter 2, der eine Mischkammer 3 umschließt und zum Beladen über eine obere Öffnung 4 zugänglich und nach unten hin durch einen Boden 5 geschlossen ist. In der Nähe des Bodens 5 ist in einer der Seitenwände des Behälters 2 eine bevorzugt verschließbare Ausgabeöffnung 6 vorgesehen, durch die das Mischgut, insbesondere Futter in Halmform, ausgegeben wird.

Im Inneren der Mischkammer ist eine Mischschnecke 7 um eine vertikale Drehachse 7a drehbar angeordnet. Die Mischschnecke 7 enthält eine Schneckenwelle 8, die beispielsweise als Schneckenrohr ausgebildet sein kann, und bevorzugt einen einzigen Schneckengang 9, der sich von einem Bereich in der Nähe des Bodens 5 bis zum oberen freien Ende der Schneckenwelle 8 um diese herumwindet. Der Schneckengang 9 hat im Bereich des Bodens 5 seine größte radiale Erstreckung und verschmälert sich in Richtung auf das freie obere Ende der Schneckenwelle 8. Im dargestellten Ausführungsbeispiel ist die Verjüngung diskontinuierlich, wobei die Größenabnahme zwischen der untersten Windung und der nächst höheren Windung wesentlich stärker ausfällt, als zwischen den restlichen Windungen. Die Steigung des Schneckengangs 9 sowie gegebenenfalls eine Biegung oder Krümmung seiner Oberfläche entspricht den Verhältnissen bei üblichen Mischschnecken für den vorliegenden Verwendungszweck.

Am unteren Bereich der Mischschnecke 7, knapp oberhalb des Bodens 5, ist eine Einrichtung 10 zum Vergleichmäßigen des Ausbringens des Mischgutes aus der Ausgabeöffnung 6 vorgesehen. Die Einrichtung 10 ist so ausgebildet, dass sie die Einwirkung der Zentrifugalkraft durch die Drehung um die vertikale Drehachse 7a auf das Mischgut erhöht. Zu diesem Zweck sind zwei oder drei, mit gleichen Abständen symmetrisch um die vertikale Drehachse verteilt angeordnete Führungsplatten 11 vorgesehen, wobei nur eine der Führungsplatten mit dem Anfang des Schneckengangs 9 im Bereich des Bodens 5 zusammenwirkt und an der Ausgabeöffnung 6 vorbeistreicht. Jede Führungsplatte 11 erstreckt sich bevorzugt über maximal 60°, da damit ein im Wesentlichen kontinuierliches Ausbringvolumen des Mischgutes ohne die Gefahr von Verstopfungen erreicht werden kann.

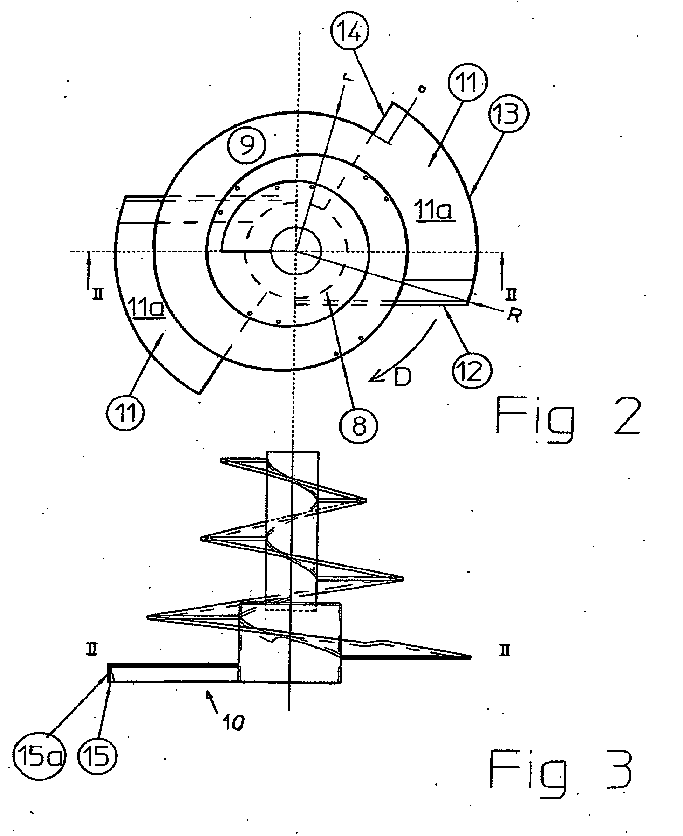

Jede der in den Fig. 2 und 3 näher dargestellten Führungsplatten 11 ist im dargestellten Ausführungsbeispiel etwa kreissektor- bzw. tortenstückförmig ausgebildet und weist eine in Drehrichtung D vorlaufende Aufnahmekante 12, die bevorzugt an einer Aufnahmeleiste angeordnet ist, eine Umfangskante 13 und eine nachlaufende Kante 14 auf. Die Umfangskante 13 hat am Zusammentreffen mit der Aufnahmekante 12 einen Abstand R zur Drehachse 7a, der etwa dem Radius des Bodens 5 bzw., bei nicht kreisrunden Böden 5, dem kleinsten Abstand des Umfangs des Bodens 5 zur Drehachse 7a entspricht, so dass die Aufnahmekante 12 im Wesentlichen die gesamte Bodenfläche überstreicht. Der Abstand R der Umfangskante 13 bleibt bis zur nachlaufenden Kante 14 im Wesentlichen gleich oder verringert sich nur unwesentlich. Die Umfangskante 13 erstreckt sich im dargestellten Ausführungsbeispiel über einen Winkelbereich von etwa 60°.

Demgegenüber ist der größte Abstand r des Schneckengangs 9 der Mischschnecke 7 von der Drehachse 7a um den Betrag a geringer als der Abstand R, so dass die Führungsplatte 11 entlang der gesamten Umfangskante 13 unter dem Schneckengang 9 hervorragt, wobei die nach oben weisende Fläche 11a der Führungsplatte 11 als Auflagefläche für Mischgut ausgebildet ist. Für eine gute Auflage des Mischgutes ist die Auf lagefläche 11a bevorzugt eben, d.h. nicht gewölbt, ausgebildet, kann jedoch mit einer Steigung von der Aufnahmekante 12 in Richtung auf die nachlaufende Kante 14 versehen sein, die gleich oder geringer als die Steigung des Schneckengangs 9 ist.

Die Führungsplatte 11 ist im dargestellten Ausführungsbeispiel asymmetrisch angebracht, d.h. der äußere Bereich der Aufnahmekante 12, der an die Umfangskante 13 anstößt, ist in Drehrichtung D nachlaufend gegenüber den radial weiter innenliegenden Bereichen der Aufnahmekante 12 ausgebildet, wobei die Aufnahmekante 12 bevorzugt tangential zum Schneckenrohr 8 verläuft. Die nachlaufende Kante 14 verläuft im Wesentlichen radial zur Drehachse 7a.

Im dargestellten Ausführungsbeispiel sind zwei im Wesentlichen identisch ausgebildete Führungsplatten 11 vorgesehen und symmetrisch, d.h. um 180° versetzt, um die Drehachse 7a angeordnet. Auf diese Weise befindet sich eine Auflagefläche 11 a für herabfallendes Mischgut unter etwa 20 % bis etwa 40 %, bevorzugt etwa 30 % der Außenkante der untersten vollen Windung des Schneckengangs 9, so dass ein hoher Anteil des Mischgutes, das zwischen Schnecke und Seitenwand von oben herabfällt, auf die Auflageflächen 11a gelangt und durch die Zentrifugalkraft bei der Drehung der Führungsplatten 11 kontinuierlich abgeschleudert wird, so dass sich dieses Abschleudern mit dem radialen Herausschieben durch die beiden Aufnahmekanten 12 der beiden Führungsplatten 11 aus der Ausgabeöffnung 6 überlagert. Auf diese Weise wird eine wesentlich gleichmäßigere Ausgabe des Mischgutes aus der Ausgabeöffnung 6 erreicht, als dies mit den beiden Aufnahmekanten 12 allein möglich wäre.

Im dargestellten Ausführungsbeispiel ist die Umfangskante 13 jeder der Führungsplatten 11 mit einer Mischgut-Abweisfläche 15a versehen, die an einer sich zylindrisch nach unten erstreckenden Schürze 15 angeordnet ist. Die Abweisfläche 15a ist konstruktiv in gleicher Weise ausgebildet und wirkt wie die Abweisfläche der DE-U-202 01 339. Durch diese Abweisfläche wird bei Mischern, die mehr als zwei Mischschnecken enthalten, und bei denen Übergangsöffnungen zwischen den Mischschnecken vorgesehen sind, verhindert, dass das Mischgut von der in der gewollten Förderrichtung vorderen Mischschnecke wieder zurück auf die hintere Mischschnecke gedrückt wird. Dabei werden die Drehpositionen der Mischschnecken so aufeinander abgestimmt, dass die Übergabeöffnung durch die Schürze 15 verschlossen wird, wenn die in der gewünschten Förderrichtung vordere Mischschnecke dazu tendiert, Mischgut zurück zur hinteren Mischschnecke zu drücken.

In den in den Fig. 2 und 3 gezeichneten Ausführungsbeispielen einer Mischschnecke 7 ist eine der Führungsplatten 11 einstückig mit dem Schraubengang 9 ausgebildet bzw. mit ihrer nachlaufenden Kante 14 an dessen untere Anfangskante angeschweißt, so dass die Aufnahmekante 12 dieser Führungsplatte 11 als Aufnahmekante für den Schneckengang 9 dient.

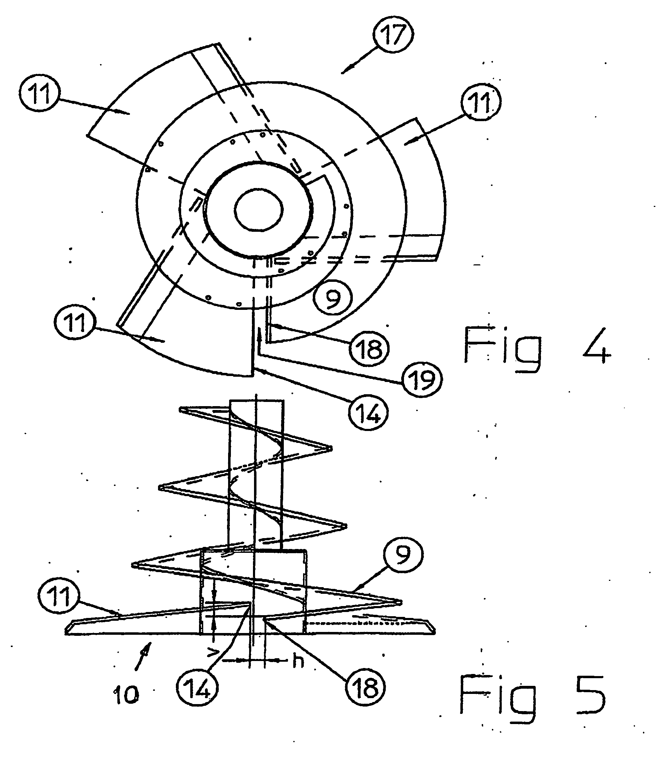

Die Fig. 4 bis 7 zeigen Abwandlungen dieser Konstruktion.

Die Fig. 4 und 5 zeigen eine weitere Einrichtung 10 zum Vergleichmäßigen des Ausbringens des Mischgutes mit einer Mischschnecke 17, die sich von der Mischschnecke 7 im Wesentlichen nur durch eine größere Anzahl von Führungsplatten 11 unterscheidet, wobei im vorliegenden Falle drei identisch ausgebildete Führungsplatten 11 vorgesehen sind, die im Wesentlichen wie die Führungsplatten 11 der Fig. 2 ausgebildet und angeordnet sind, sich jedoch jeweils über einen Winkelbereich von weniger als 60° erstrecken können. In der Summe überdecken jedoch die Auflageflächen 10a wiederum bevorzugt 30 % bzw. 120°. Alle drei Führungsplatten 11 sind in der gleichen Ebene angeordnet.

Eine weitere Besonderheit der Mischschnecke 17 betrifft die Anordnung der dem unteren Ende des Schneckenganges 9 zugeordneten, ersten Führungsplatte 11. Wie insbesondere Fig. 5 zeigt, hat der Schneckengang 9 in üblicher Weise eine freie Aufnahmekante 18, die sich im Wesentlichen radial zur Drehachse 7a erstreckt. Diese Aufnahmekante 18 ist, wie üblich, in der Nähe des Bodens 5 angeordnet. Die sich unmittelbar anschließende Führungsplatte 11 weist im Wesentlichen die gleiche Steigung wie der Schneckengang 9 auf und ist mit ihrer nachlaufenden Kante 14 mit einem vertikalen Abstand v und einem horizontalen Abstand h, jedoch parallel zur Aufnahmekante 18 angeordnet, so dass sich zwischen der Aufnahmekante 18 des Schneckengangs 9 und der nachlaufenden Kante 14 der anliegenden Führungsplatte 11 ein Spalt 19 bildet.

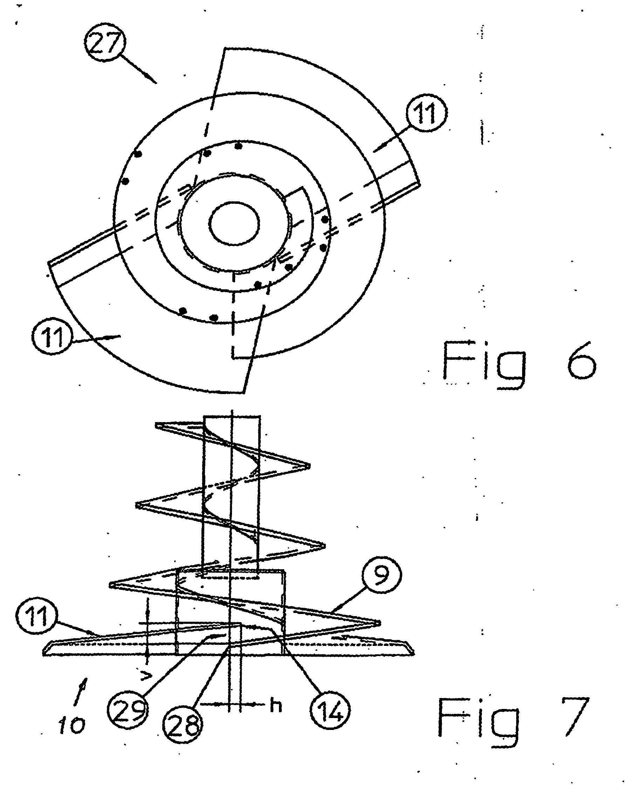

Die Fig. 6 und 7 zeigen ein weiteres Ausführungsbeispiel einer erfindungsgemäßen Einrichtung 10 zum Vergleichmäßigen des Ausbringens des Mischgutes mit einer Mischschnecke 27, die sich von der Mischschnecke nach den Fig. 2 und 3 dadurch unterscheidet, dass der Schneckengang 9, wie beim Ausführungsbeispiel nach den Fig. 4 und 5, eine eigene Aufnahmekante 28 aufweist, die mit vertikalem Abstand v und horizontalem Abstand h unter der nachlaufenden Kante 14 der anliegenden Führungsplatte 11 angeordnet ist, im Gegensatz zu den Fig. 4 und 5 jedoch so, dass sich die beiden Kanten 14 und 18 in vertikaler Richtung überlappen, so dass die beiden Kanten einen sich in vertikaler Richtung erstreckenden Spalt 29 begrenzen.

Die Erfindung ist nicht auf die beschriebenen und gezeichneten Ausführungsbeispiele beschränkt. So kann jedes Ausführungsbeispiel einer erfindungsgemäßen Mischschnecke mit zwei, drei oder mit noch mehr Führungsplatten versehen sein, die bevorzugt jedoch gleichmäßig beabstandet und mit nachlaufenden bzw. tangentialen Aufnahmekanten um die Drehachse angeordnet sind. Dadurch kann sich auch derjenige Anteil der Umfangskante der unteren vollen Windung des Schneckengangs, der durch eine Auflagefläche der Führungsplatte unterlegt ist, wesentlich erhöht werden. Statt der in Fig. 1 dargestellten Mischschnecke können Mischschnecken mit sich gleichmäßig verjüngendem oder konstant großem Schneckengang eingesetzt werden.

## Patentansprüche

1. Mischer (1), insbesondere Futtermischer, mit einer mit einem Boden (5) versehenen Mischkammer (3), die mit einer Ausgabeöffnung(6) für das Mischgut versehen ist, und in der eine um eine vertikale Drehachse (7a) angetriebene Mischschnecke(7) untergebracht ist, wobei die Mischschnecke (7) wenigstens einen Schneckengang (9) aufweist, wobei der Schneckengang (9) an seinem Anfang im Bereich des Bodens (5) seinen größten radialen Abstand (r) zur Drehachse (7a) aufweist, und nach oben schmaler wird, und mit einer rotierend angetriebenen Einrichtung (10) zum Vergleichmäßigen des Ausbringens des Mischgutes, die im unteren, der Ausgabeöffnung (6) zugeordneten Bereich der Mischschnecke (7) vorgesehen ist, **dadurch gekennzeichnet, dass** die Einrichtung (10) mindestens zwei gleichmäßig um die Drehachse (7a) verteilt angeordnete, die Einwirkung der Zentrifugalkraft auf das Mischgut erhöhende Führungsplatten (11) mit jeweils einer Auflagefläche (11a) für das Mischgut enthält, wobei nur eine der Führungsplatten (11) dem Anfang des Schneckengangs (9) zugeordnet ist, wobei der Abstand (R) einer radial außenliegenden Begrenzung (13) jeder Auflagefläche (11a) zur Drehachse (7a) über die Länge der Begrenzung (13) in Drehrichtung (D) im Wesentlichen gleich ist und wobei der größte Abstand (r) des Schneckengangs (9) um einen Betrag (a) geringer ist als der Abstand (R) der außenliegenden Begrenzung (13) jeder Auflagefläche (11a) zur Drehachse (7a).

2. Mischer nach Anspruch 1, **dadurch gekennzeichnet, dass** die Auflagefläche (11a) etwa 20 % bis etwa 40%, bevorzugt etwa 30 %, des Winkelbereichs um die Drehachse (7a) einnimmt..

3. Mischer nach Anspruch 1 oder 2, **dadurch gekennzeichnet, dass** die Auflagefläche (11a) in einem radial bezüglich der Drehachse (7a) außenliegenden Bereich eine größere Breite in Drehrichtung (D) aufweist als in einem radial innenliegenden Bereich.

4. Mischer nach einem der Ansprüche 1 bis 3, **dadurch gekennzeichnet, dass** die Auflagefläche (11 a) eine kreissektor- oder tortenstückähnliche Form aufweist.

5. Mischer nach einem der Ansprüche 1 bis 4, **dadurch gekennzeichnet, dass** die Führungsplatte (11) eine vorlaufende Aufnahmekante (12) aufweist, deren radial äußerer Bereich gegenüber ihrem radial inneren Bereich in Drehrichtung (D) nachlaufend angeordnet ist.

6. Mischer nach Anspruch 5, **dadurch gekennzeichnet, dass** die Aufnahmekante (12) im Wesentlichen tangential zu einer die Drehachse (7a) enthaltenden Schneckenwelle (8) verläuft.

7. Mischer nach einem der Ansprüche 1 bis 6, **dadurch gekennzeichnet, dass** die Auflagefläche (11a) unter einem Steigungswinkel verläuft.

8. Mischer nach einem der Ansprüche 1 bis 7, **dadurch gekennzeichnet, dass** die Auflagefläche (11a) eben ausgebildet ist. .

9. Mischer nach einem der Ansprüche 1 bis 8, **dadurch gekennzeichnet, dass** die Führungsplatte (11) mit der unteren Windung des Schneckengangs (9) der Mischschnecke (7) verbunden ist.

10. Mischer nach einem der Ansprüche 1 bis 9, **dadurch gekennzeichnet, dass** eine nachlaufende Kante (14) der Führungsplatte (11) mit einem vertikalen Abstand (v) über und einem horizontalen Abstand (h) vor einer vorlaufenden Aufnahmekante (18) der Mischschnecke (17) angeordnet ist.

11. Mischer nach einem der Ansprüche 1 bis 9, **dadurch gekennzeichnet, dass** eine nachlaufende Kante (14) der Führungsplatte (11) mit einem vertikalen Abstand (v) über der vorlaufenden Aufnahmekante (28) der Mischschnecke (27) und diese mit einem horizontalen Abstand (h) überlappend angeordnet ist.

12. Mischer nach einem der Ansprüche 1 bis 11, **dadurch gekennzeichnet, dass** die Mischschnecke (7, 17, 27) einen Schneckengang (9) aufweist, bei der sich der Durchmesser der untersten Windung gegenüber dem Durchmesser der zweituntersten Windung stärker verjüngt als der Durchmesser der zweituntersten Windung gegenüber dem Durchmesser der sich an die zweitunterste Windung anschließenden Windung.

## Claims

1. Mixer (1), in particular a feed mixer, comprising a mixing chamber (3) provided with a bottom (5), said mixing chamber being provided with a discharge opening (6) for the mix, and in which a mixing screw (7) is accommodated, driven about a vertical rotating axis (7a), wherein the mixing screw (7) comprises at least one spiral (9), wherein the spiral (9) has its largest radial distance (r) to the rotary axis (7a) at its beginning in the area of the bottom (5), said distance becoming narrower towards the top, and comprising a rotary driven device (10) for smoothing the discharge of the mix which is provided in the lower section of the mixing screw (7) assigned to the discharge opening (6), **characterized in that** the device (10) contains at least two guide plates (11) distributed regularly around the axis of rotation (7a) and increasing the action of the centrifugal force on the mix, with at least one deposition surface (11a) for the mix, wherein only one of the guide plates (11) is assigned to the beginning of the spiral (9), wherein the distance (R) of a radially outward boundary (13) of each deposition surface (11a) towards the rotary axis (7a) is substantially equal across the length of the boundary (13) in the direction of rotation (D), and wherein the largest distance (r) of the spiral (9) is smaller by an amount (a) than the distance (R) of the outer boundary (13) of each deposition surface (11a) with respect to the rotary axis (7a).

2. Mixer according to Claim 1, **characterized in that** the deposition surface (11 a) takes up approximately 20% to approximately 40%, preferably approximately 30%, of the angular range around the rotating axis (7a).

3. Mixer according to one of the Claims 1 or 2, **characterized in that** the deposition surface (11a) comprises a greater width in the direction of rotation (D) in an outer region radially with regard to the rotating axis (7a) than in a radially inner region.

4. Mixer according to one of the Claims 1 to 3, **characterized in that** the deposition surface (11a) comprises a shape similar to a circular sector or cake slice.

5. Mixer according to one of the Claims 1 to 4, **characterized in that** the guide plate (11) comprises a leading take-up edge (12), the radially outer section of which is arranged trailing compared to its radially inner section in the direction of rotation (D).

6. Mixer according to Claim 5, **characterized in that** the take-up edge (12) essentially runs tangential to a screw shaft (8) containing the rotating axis (7a).

7. Mixer according to one of the Claims 1 to 6, **characterized in that** the deposition surface (11 a) runs at a pitch angle.

8. Mixer according to one of the Claims 1 to 7, **characterized in that** the deposition surface (11a) is formed flat.

9. Mixer according to one of the Claims 1 to 8, **characterized in that** the guide plate (11) is connected to the lower winding of the spiral (9) of the mixing screw (7).

10. Mixer according to one of the Claims 1 to 9, **characterized in that** a trailing edge (14) of the guide plate (11) is arranged at a vertical distance (v) above and a horizontal distance (h) in front of a leading take-up edge (18) of the mixing screw (17).

11. Mixer according to one of the Claims 1 to 9, **characterized in that** a trailing edge (14) of the guide plate (11) is arranged at a vertical distance (v) above the leading take-up edge (28) of the mixing screw (27) and is overlapping the leading take-up edge (28) with a horizontal distance (h).

12. Mixer according to one of the Claims 1 to 11, **characterized in that** the mixing screw (7, 17, 27) comprises a spiral (9) with which the diameter of the lowermost winding compared to the diameter of the second lowermost winding narrows more than the diameter of the second lowermost winding compared to the diameter of the winding following the second lowermost winding.

## Revendications

1. Mélangeur (1), en particulier mélangeur de fourrage, comportant une chambre de mélange (3) pourvue d'un fond (5), qui est pourvue d'une ouverture de distribution (6) pour le produit à mélanger et dans laquelle est logée une vis mélangeuse sans fin (7) entraînée autour d'un axe de rotation vertical (7a), la vis mélangeuse sans fin (7) présentant au moins une section hélicoïdale (9), la section hélicoïdale (9) présentant son plus grand écartement radial (r) par rapport à l'axe de rotation (7a) à son début, dans la zone du fond (5), et s'amincissant vers le haut, et comportant un dispositif (10) entraîné en rotation pour égaliser l'expulsion du produit à mélanger, qui est prévu dans la zone inférieure de la vis mélangeuse sans fin (7), associée à l'ouverture de distribution (6), **caractérisé en ce que** le dispositif (10) comprend au moins deux plaques de guidage (11) réparties uniformément autour de l'axe de rotation (7a) et augmentant l'effet de la force centrifuge sur le produit à mélanger et comportant chacune une surface de support (11a) pour le produit à mélanger, seule l'une des plaques de guidage (11) étant associée au début de la section hélicoïdale (9), l'écartement (R) d'une délimitation (13) située radialement à l'extérieur de chaque surface de support (11a) par rapport à l'axe de rotation (7a) étant essentiellement égal à la longueur de la délimitation (13) de chaque surface de support (11A) dans la direction (D), et le plus grand écartement (r) de la section hélicoïdale (9) étant plus petit d'un distance (a) que l'écartement (R) de la délimitation extérieure (13) de chaque surface de support (11a) par rapport à l'axe de rotation (7a).

2. Mélangeur selon la revendication 1, **caractérisé en ce que** la surface de support (11a) occupe environ de 20 % à environ 40 %, de préférence environ 30 % de la zone angulaire située autour de l'axe de rotation (7a).

3. Mélangeur selon la revendication 1 ou 2, **caractérisé en ce que**, dans une zone située radialement à l'extérieur par rapport à l'axe de rotation (7a), la surface de support (11a) présente une largeur plus grande dans la direction de rotation (D), que dans une zone située radialement à l'intérieur.

4. Mélangeur selon l'une des revendications 1 à 3, **caractérisé en ce que** la surface de support (11a) présente une forme similaire à un secteur de disque ou à une part de tarte.

5. Mélangeur selon l'une des revendications 1 à 4, **caractérisé en ce que** la plaque de mélange (11) présente une arête de réception antérieure (12), dont la zone radialement extérieure est disposée de manière subséquente dans la direction de rotation (D), par rapport à sa zone radialement intérieure.

6. Mélangeur selon la revendication 5, **caractérisé en ce que** l'arête de réception (12) s'étend de manière essentiellement tangentielle à un arbre de vis sans fin (8) contenant l'axe de rotation (7a).

7. Mélangeur selon l'une des revendications 1 à 6, **caractérisé en ce que** la surface de support (11a) s'étend suivant un angle de montée.

8. Mélangeur selon l'une des revendications 1 à 7, **caractérisé en ce que** la surface de support (11a) est réalisée plane.

9. Mélangeur selon l'une des revendications 1 à 8, **caractérisé en ce que** la plaque de guidage (11) est reliée à la spire inférieure de la section hélicoïdale (9) de la vis mélangeuse sans fin (7).

10. Mélangeur selon l'une des revendications 1 à 9, **caractérisé en ce qu'**une arête subséquente (14) de la plaque de guidage (11) est disposée suivant un écartement vertical (v) au-dessus et un écartement horizontal (h) devant une arête de réception antérieure (18) de la vis mélangeuse sans fin (17).

11. Mélangeur selon l'une des revendications 1 à 9, **caractérisé en ce qu'**une arête subséquente (14) de la plaque de guidage (11) est disposée suivant un écartement vertical (v) au-dessus de l'arête de réception antérieure (28) de la vis mélangeuse sans fin (27) et est disposée de manière à recouvrir celle-ci sur une distance horizontale (h).

12. Mélangeur selon l'une des revendications 1 à 11, **caractérisé en ce que** la vis mélangeuse sans fin (7, 17, 27) présente une section hélicoïdale (9) dans laquelle le diamètre de la spire la plus basse diminue plus rapidement par rapport au diamètre de la deuxième spire la plus basse que le diamètre de la deuxième spire la plus basse par rapport à la spire faisant suite à la deuxième spire la plus basse.
